# EUROPEAN PATENT APPLICATION

(11) **EP 4 628 393 A1**
(43) Date of publication of application: **08.10.2025**
(21) Application number: 24168808.4
(22) Date of filing: 05.04.2024
(51) Int. Cl.: B62J 6/055

(54) **BICYCLE STEERING PROMPT SYSTEM**

(71) Applicant: Eiso Enterprise Co., Ltd., Taoyuan City 333 (TW)
(72) Inventor: LEE, Yi-Hsiung, 333 Taoyuan City (TW); TU, Hung-Ching, 333 Taoyuan City (TW)
(74) Representative: 2K Patentanwälte Blasberg Kewitz & Reichel

(57) **Abstract**

A bicycle steering prompt system (20) includes a direction light set (21), a prompt light set (22) and a controller (23). The prompt light set (22) includes at least two projection lights (221), and each of the at least two projection lights (221) projecting at least one image (40) upon being activated. The controller (23) is formed a control relationship with the direction light set (21) and the prompt light set (22), and the controller (23) triggers the prompt light set (22) when triggering the direction light set (21) to give a direction prompt, so that one of the at least two projection lights (221) is activated at a side same as the direction light set (21) is triggered. When in implementation of the invention, each of the at least two projection lights (221) projects at least one image (40) on a ground around a rider to give a prompt of a traveling direction where the rider is about to go to people surrounding the rider.

## Description

### FIELD OF THE INVENTION

The invention relates to a bicycle lighting system, in particular, a bicycle lighting system provided with a prompt lighting set.

### BACKGROUND OF THE INVENTION

TW 201906759A discloses a light projection visual space and safety system for bicycles used to define a distinct safety space. When a ground lighting of a front lighting is tilted at an angle greater than a predetermined angle relative to a vertical line on a ground, the ground lighting of the front lighting emits light as well as projects a first light field or light area in a shape of a cone to a predetermined position close to an underside of a top of a bicycle. When a ground lighting of a rear lighting is tilted at an angle greater than a predetermined angle relative to a vertical line of the ground, the ground lighting of the rear lighting emits light as well as projects a second light field or light area in a shape of a cone to a predetermined position close to an underside of the top of the bicycle to define a distinct safety space.

TW 201910173A discloses a directional warning light device for bicycles provided with an attitude sensor on a circuit board. When the bicycle turns left, the attitude sensor of the direction warning light device generates a left turn signal and transmits to a control unit. After the control unit receives the left turn signal, a left turn projection light set is activated to project a left turn indication sign on the ground to form a left turn direction warning signal to remind vehicles behind.

Although the aforementioned two patent applications provide technical solutions for generating prompts on the ground when turning, however, both patent applications determine whether to provide prompts based on an angle of inclination of a vehicle body upon turning. A tilting of the vehicle body indicates that a vehicle is travelling on a corner or changing a travel path, if a prompt is given at the time, nearby vehicles are difficult to react, thereby the technical solutions provided by both patent applications do not satisfy an actual riding condition, obviously.

### SUMMARY OF THE INVENTION

A main object of the invention is to solve the problem of conventional technical solution that determines whether to give a prompt of projection based on a tilting angle of a bicycle body.

In order to achieve the above object, the invention provides a bicycle steering prompt system, including a direction light set, a prompt light set, and a controller. The prompt light set includes at least two projection lights, and each of the at least two projection lights projecting at least one image upon being activated. The controller is formed a control relationship with the direction light set and the prompt light set, the controller triggers the prompt light set when triggering the direction light to give a direction prompt, so that one of the at least two projection lights is activated at a side same as the direction light set is triggered.

In one embodiment, each of the at least two projection lights comprises a housing, the housing is a handle or a handle plug.

In one embodiment, an end of the housing is used to be a projection end by each of the at least two projection lights.

In one embodiment, each of the at least two projection lights comprises a communication module implemented by at least one of protocol as follows ANT+ wireless transmission protocol, Bluetooth wireless transmission protocol, CAN wired communication protocol, and UART wired communication protocol.

In one embodiment, each of the at least two projection lights is controlled by at least one third-party device, other than the controller, through the communication module.

In one embodiment, each of the at least two projection lights comprises a processor and a light projection unit connected to the processor, and the processor controls the light projection unit based on a projection setting data stored therein.

In one embodiment, the projection setting data describes a projection brightness, a blink rate, or a pattern associated with the at least one image.

In one embodiment, each of the at least two projection lights comprises a battery unit.

In one embodiment, each of the at least two projection lights is in a wired connection to the power supply unit.

In one embodiment, each of the at least two projection lights is replaceable by a laser light.

In one embodiment, the controller is connected to two supplement lights of a traveling light supplement system, when the controller triggers the direction light set to give a direction prompt, one of the two supplement lights is activated at a side same as the direction light set is triggered.

Through the foregoing implementation of the invention, compared with the prior art, the invention has the following characteristics: the controller of the present invention controls the direction light set and the prompt light set.

When the vehicle is about to change a path or corner and a rider operates the controller, the direction light set and the prompt light set instantly provide direction prompts and a safe distance warning when the vehicle is shifted, thereby increasing a safety of bicycle activities.

### BRIEF DESCRIPTION OF THE DRAWINGS

FIG. 1 is a unit diagram I of a bicycle steering prompt system of the invention.
FIG. 2 is an implementation schematic diagram I of the bicycle steering prompt system of the invention.
FIG. 3 is an implementation schematic diagram II of the bicycle steering prompt system of the invention.
FIG. 4 is an implementation schematic diagram III of the bicycle steering prompt system of the invention.
FIG. 5 is a structural schematic diagram I of a projection light of the bicycle steering prompt system of the invention.
FIG. 6 is a structural schematic diagram II of a projection light of the bicycle steering prompt system of the invention.
FIG. 7 is an implementation schematic diagram of the bicycle steering prompt system used with groups.
FIG. 8 is a unit diagram of the bicycle steering prompt system in coordinate with traveling light supplement system.
FIG. 9 is an implementation schematic diagram I of the bicycle steering prompt system in coordinate with traveling light supplement system.
FIG. 10 is an implementation schematic diagram II of the bicycle steering prompt system in coordinate with traveling light supplement system.
FIG. 11 is a unit diagram II of the bicycle steering prompt system of the invention.
FIG. 12 is a unit diagram III of the bicycle steering prompt system of the invention.

### DETAILED DESCRIPTION OF THE PREFERRED EMBODIMENTS

The detailed description and technical content of the invention are described below with reference to the accompanying drawings.

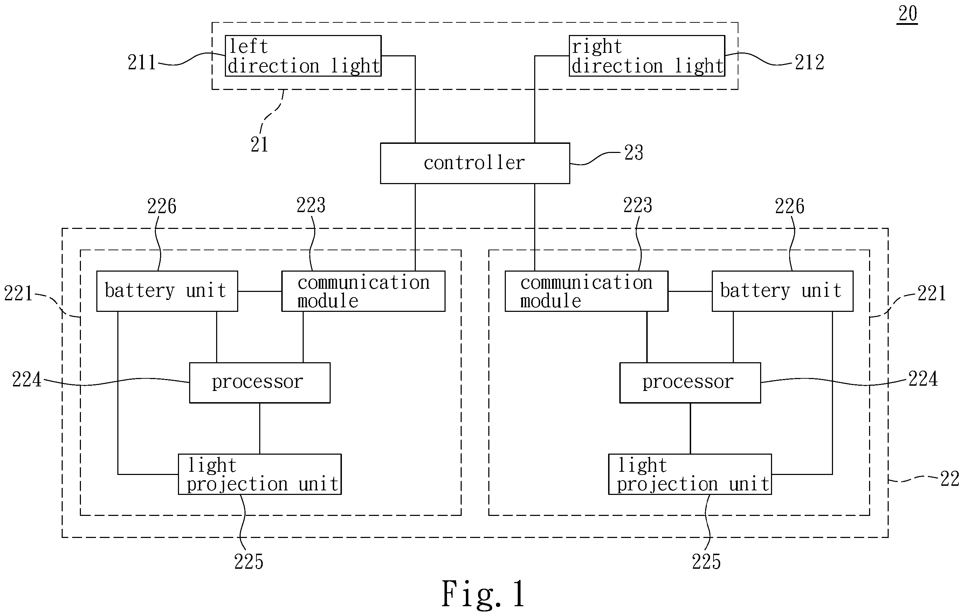

Please refer to FIG. 1. The invention provides a bicycle steering prompt system 20 configured to be disposed on a bicycle body 30. The bicycle steering prompt system 20 includes a direction light set 21, a prompt light set 22, and a controller 23. The direction light set 21 includes a left direction light 211 and a right direction light 212. The left direction light 211 and the right direction light 212 can be independent fixtures or integrated into a single fixture.

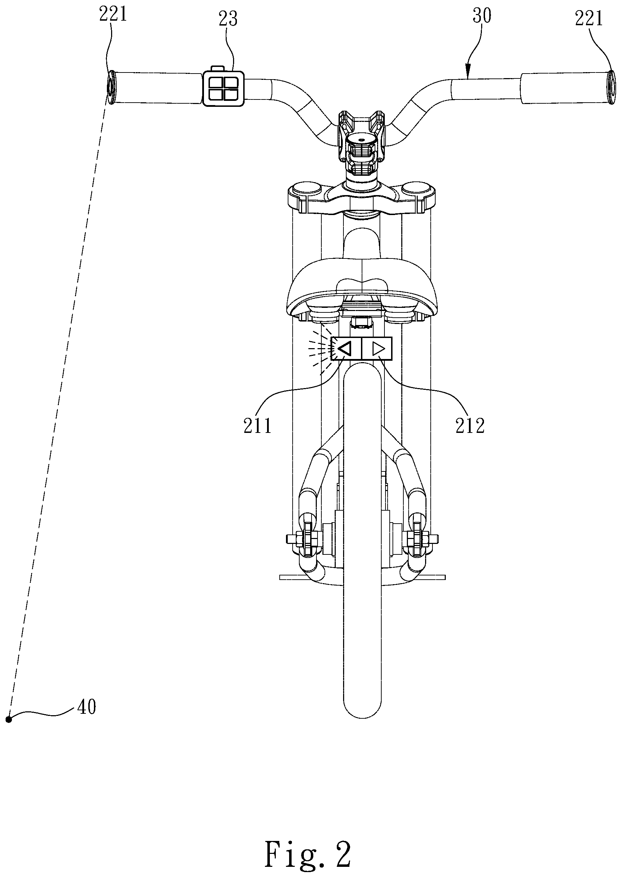

Please refer to FIG. 1 and FIG. 2. The prompt light set 22 includes at least two projection lights 221 configured to the bicycle body 30, and projection positions of the at least two projection lights 221 are different. For example, one of the at least two projection lights 221 projects toward a right side of the bicycle body 30 when activated, and the other one of the at least two projection lights 221 projects toward a left side of the bicycle body 30 when activated. Further, the at least two projection lights 221 project toward a ground when implemented. Each of the at least two projection lights 221 projects at least one image 40 when activated. Images 40 projected by the at least two projection lights 221 need to be not affected by ambient light or other light sources. Further, in one embodiment, the at least two projection lights 221 adjust a power of a light source based on a current ambient light. The images 40 projected by the at least two projection lights 221 are varied based on the control from other synergistic components, such as changing projection of the images 40 in a blinking manner in response to oncoming vehicles. In one embodiment, each of the at least two projection lights 221 may be replaced by a laser light. A main object of the prompt light set 22 is different from that of the direction light set 21, an object of the direction light set 21 is indicating a direction about to go to vehicles behind by light signals, and an object of the prompt light set 22 is to warn the vehicles behind or neighboring vehicles to keep a distance by clearly presenting a pattern on the ground.

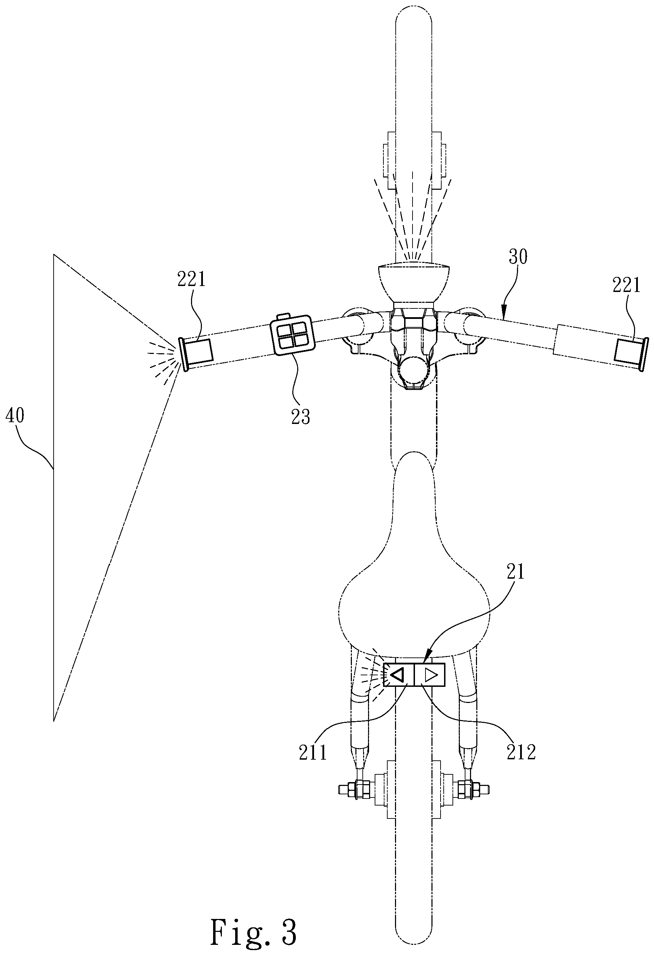

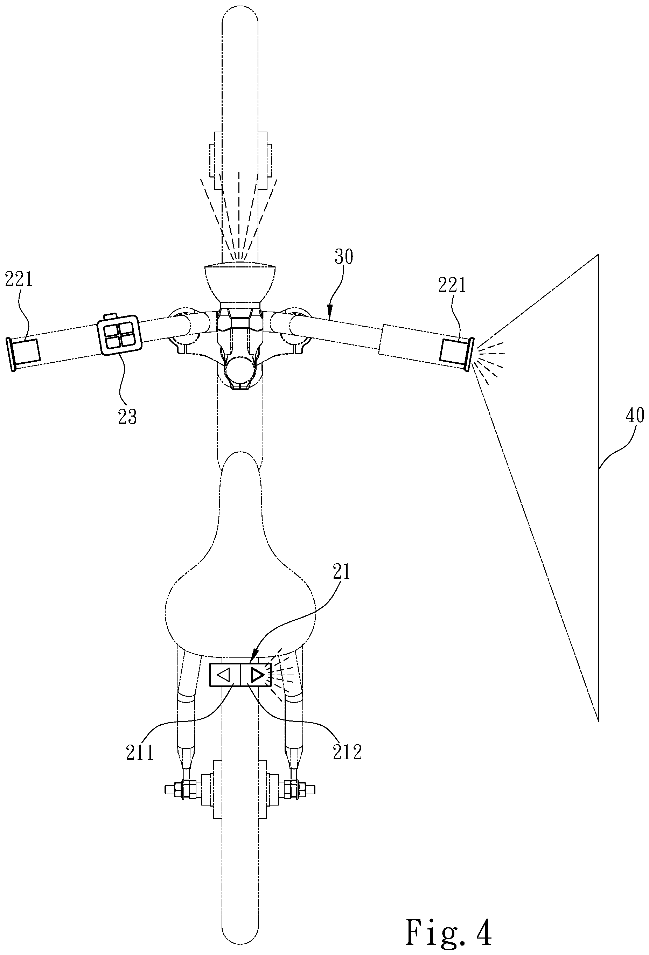

The controller 23 forms a control relationship with the direction light set 21 and the prompt light set 22. Specifically, the controller controls the direction light set 21 and the prompt light set 22. The controller 23, the direction light set 21 and the prompt light set 22 can be connected via wired or wireless. The controller 23 is a device configured to the bicycle body 30, or implemented by a smartphone. The controller 23 triggers the direction light set 21 to give a direction prompt, and triggers the prompt light set 22 simultaneously, so that one of the at least two projection lights 221 is activated at a side same as the direction light set 21 is triggered. Please refer to FIG. 3 and FIG. 4, each of the at least two projection lights 221 is implemented in association with the left direction light 211 or the right direction light 212 of the direction light set 21 located on the same side. For example, one of the at least two projection lights 221 located on the left side of the bicycle body 30 is implemented in association with the left direction light 211, and when the controller 23 controls the left direction light 211 for activation, the controller 23 simultaneously triggers one of the at least two projection lights 221 located on the left side of the bicycle body 30. On the other hand, one of the at least two projection lights 221 located on the right side of the bicycle body 30 is implemented in association with the right direction light 212, and when the controller 23 controls the right direction light 212 for activation, the controller 23 simultaneously triggers one of the at least two projection lights 221 located on the right side of the bicycle body 30.

Accordingly, before the vehicle is about to change a path or corner, the direction light set 21 and the prompt light set 22 instantly give direction prompts and a safe distance warning for the vehicle shifting, when a rider operates the controller 23, thereby increasing a safety of bicycle activities.

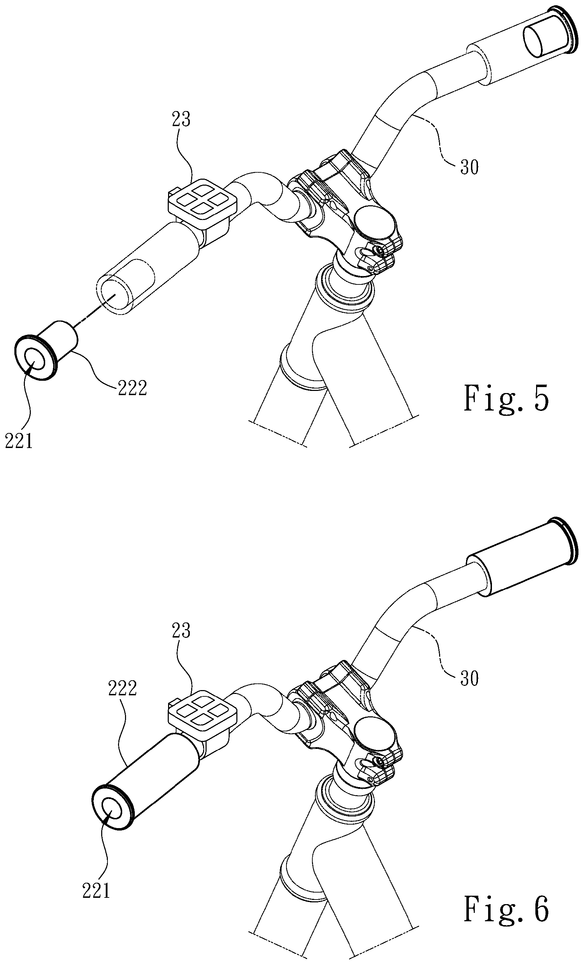

Please refer to FIG. 5 and FIG. 6. In an embodiment, each of the at least two projection lights 221 includes a housing 222, which may be a handle plug (as shown in FIG. 5) or a handle (as shown in FIG. 6). In this embodiment, the at least two projection lights 221 are located at handle positions of the bicycle body 30. Further, an end of the housing 222 is used to be a projection end by each of the at least two projection lights 221.

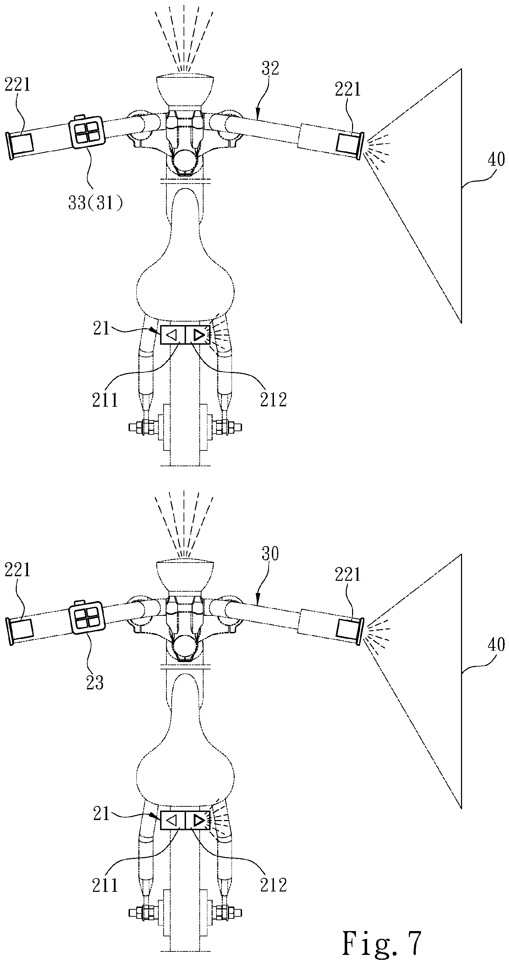

Please refer to FIG. 1, in an embodiment, each of the at least two projection lights 221 includes a communication module 223 implemented by at least one of protocols as follows: ANT+ wireless transmission protocol, Bluetooth wireless transmission protocol, CAN wired communication protocol, and UART wired communication protocol. Please refer to FIG. 7, in an embodiment, the communication modules 223 of each of the at least two projection lights 221 are not limited to communicating with the controller 23, but also communicating with at least one third-party device 31 other than the controller 23. That is to say, each of the at least two projection lights 221 can be controlled by the at least one third-party device 31, other than the controller 23, with communication module 223 owned by itself. The at least one third-party device 31 may be a smartphone, or another controller 33 configured to another bicycle body 32. Accordingly, when a bicycle team where each bicycle is configured with the bicycle steering prompt system 20 travels, the controller 23 on each bicycle may have a communication relationship with prompt light sets 22 on other bicycles, and a master-slave relationship can be further set. When a first rider intends to change a travelling direction, the first rider controls the controller 23 on his bicycle, and the controller 23 on the first rider's bicycle then links and controls all prompt light sets 22 on all bicycles in the bicycle team to give a large scale of prompts through a plurality of projection lights 221, thereby enhancing the safety of the bicycle team upon travelling.

Please refer to FIG. 1, in an embodiment, each of the at least two projection lights 221 includes a processor 224 and a light projection unit 225 connected to the processor 224, the processor 224 controls the light projection unit 225 based on a projection setting data stored therein, so that the light projection unit 225 projects the at least one image 40. Further, the projection setting data describes a projection brightness, a blink rate, or a pattern associated with the at least one image 40. Each of the at least two projection lights 221 receives a modification data published by an external device in response to the projection setting data through the communication module 223. The external device can be connected to the communication module 223 by wired or wireless. The external device may be a smartphone or a computer.

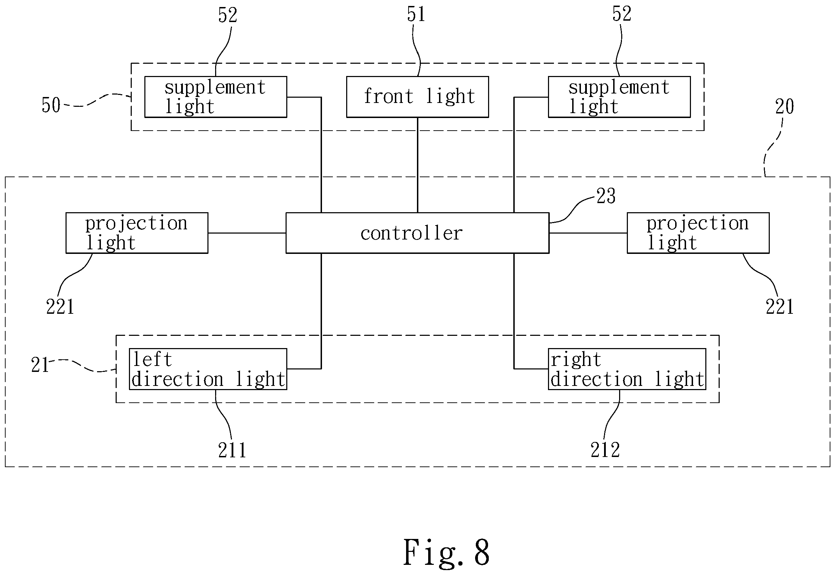

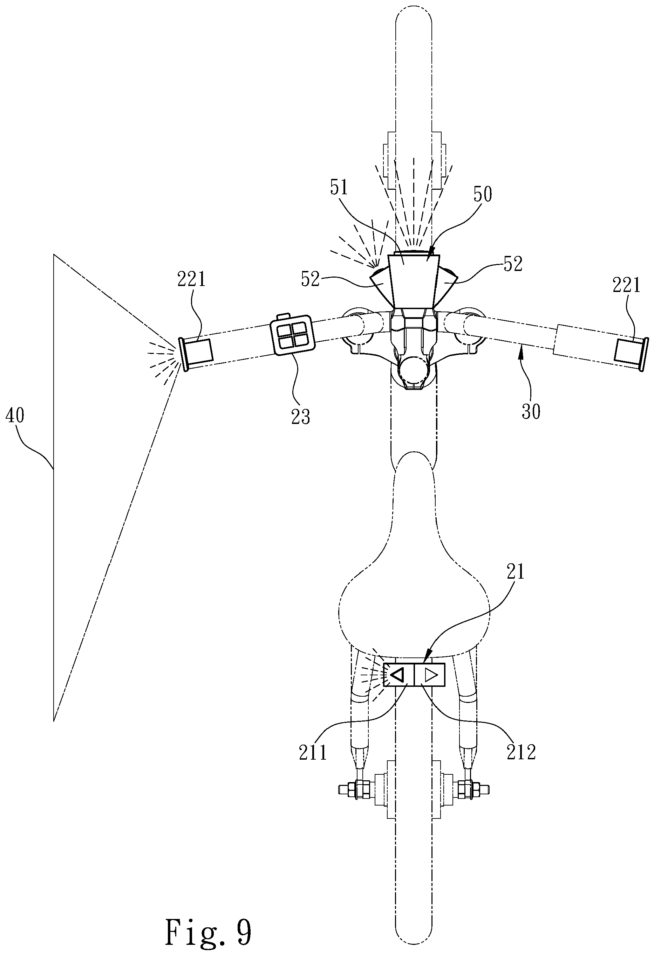

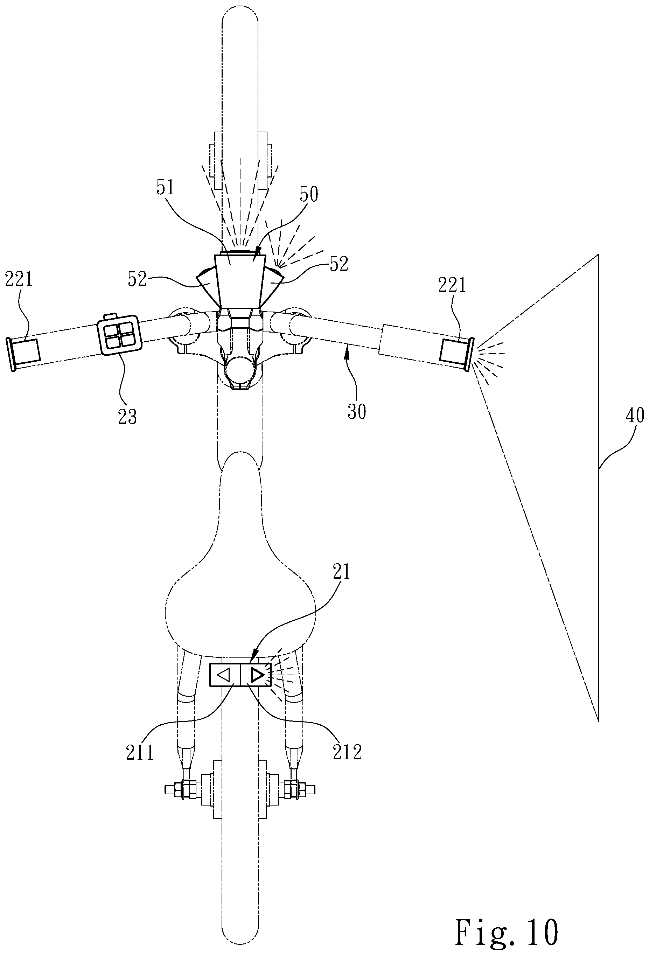

Please refer to FIG. 8, in an embodiment, the bicycle steering prompt system 20 works coordinated with a traveling light supplement system 50. The traveling light supplement system 50 includes a front light 51 configured to the bicycle body 30, and two supplement lights 52 configured to the bicycle body 30. The two supplement lights 52 are connected to the controller 23. When the controller 23 triggers the left direction light 211 or the right direction light 212 of the direction light set 21 to give a direction prompt, so that one of the two supplement lights 52 is set to be activated at a side same as the direction light set 21 is triggered. Specifically, the two supplement lights 52 project lights toward two directions, respectively. The two supplement lights 52 provide supplemental illumination in a turning direction when the bicycle body 30 is turning. One of the two supplement lights 52 providing supplemental illumination to the right side of the bicycle body 30 is set to be activated together with the right direction light 212. When the right direction light 212 is activated, one of the at least two projection lights 221 located on the right side of the bicycle body 30 is simultaneously activated, as shown in FIG. 9. One of the two supplement lights 52 providing supplemental illumination to the left side of the bicycle body 30 is set to be activated together with the left direction light 211. When the left direction light 211 is activated, one of the at least two projection lights 221 located on the left side of the bicycle body 30 is simultaneously activated, as shown in FIG. 10.

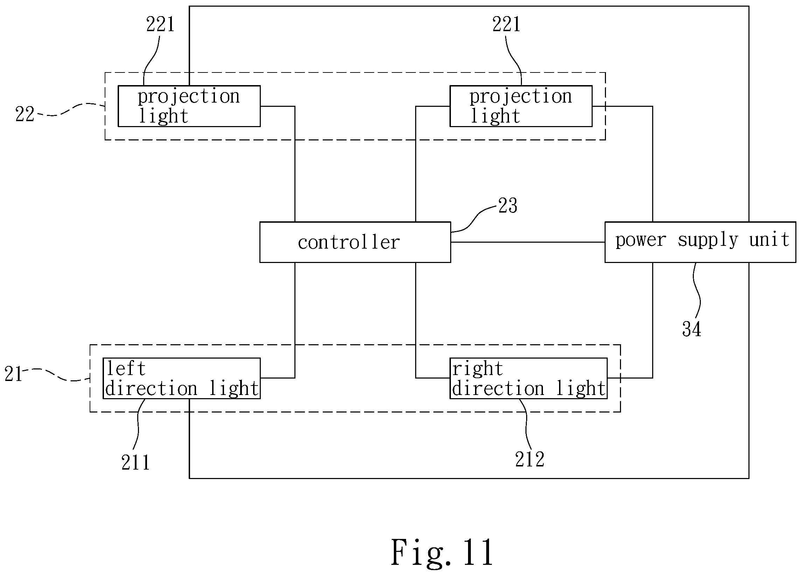

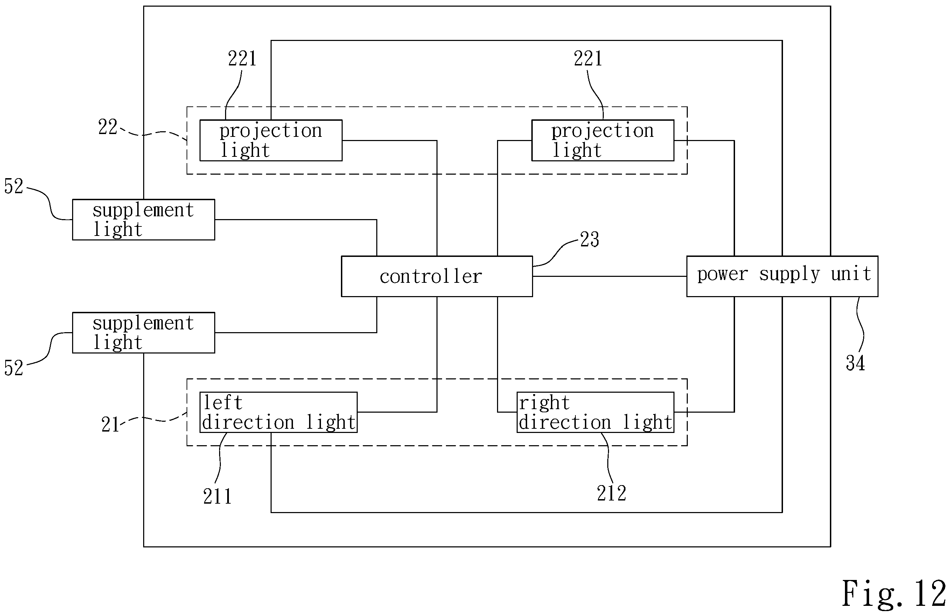

Please refer to FIG. 1, in an embodiment, each of the at least two projection lights 221 includes a battery unit 226 that supplies power for operation. Please refer to FIG. 11 and FIG. 12, in another embodiment, power of each of the at least two projection lights 221 is obtained from a power supply unit 34 of the bicycle body 30, and each of the at least two projection lights 221 is in a wired connection to the power supply unit. In this embodiment, the bicycle body 30 is an electric bicycle (E-bike).

## Claims

1. A bicycle steering prompt system (20), comprising
a direction light set (21);
a prompt light set (22), comprising at least two projection lights (221), and each of the at least two projection lights (221) projecting at least one image (40) upon being activated; and
a controller (23), formed a control relationship with the direction light set (21) and the prompt light set (22), the controller (23) triggering the prompt light set (22) when triggering the direction light set (21) to give a direction prompt so that one of the at least two projection lights (221) is activated at a side same as the direction light set is triggered.

2. The bicycle steering prompt system (20) as claimed in claim 1, wherein each of the at least two projection lights (221) comprises a housing (222), and the housing (222) is a handle or a handle plug.

3. The bicycle steering prompt system (20) as claimed in claim 2, wherein an end of the housing (222) is used to be a projection end by each of the at least two projection lights (221).

4. The bicycle steering prompt system (20) as claimed in any one of claims from 1 to 3, wherein each of the at least two projection lights (221) comprises a communication module (223) implemented by at least one of protocols as follows ANT+ wireless transmission protocol, Bluetooth wireless transmission protocol, CAN wired communication protocol, and UART wired communication protocol.

5. The bicycle steering prompt system (20) as claimed in claim 4, wherein each of the at least two projection lights (221) is controlled by at least one third-party device (31), other than the controller (23), through the communication module (223).

6. The bicycle steering prompt system (20) as claimed in any one of claims from 1 to 3, wherein each of the at least two projection lights (221) comprises a processor (224) and a light projection unit (225) connected to the processor (224), and the processor (224) controls the light projection unit (225) based on a projection setting data stored therein.

7. The bicycle steering prompt system (20) as claimed in claim 6, wherein the projection setting data describes a projection brightness, a blink rate, or a pattern associated with the at least one image.

8. The bicycle steering prompt system (20) as claimed in claim 7, wherein each of the at least two projection lights (221) comprises a communication module (223) implemented by at least one of protocols as follows ANT+ wireless transmission protocol, Bluetooth wireless transmission protocol, CAN wired communication protocol, and UART wired communication protocol.

9. The bicycle steering prompt system (20) as claimed in claim 8, wherein each of the at least two projection lights (221) is controlled by at least one third-party device (31), other than the controller (23), through the communication module (223).

10. The bicycle steering prompt system (20) as claimed in claim 9, wherein each of the at least two projection lights (221) comprises a battery unit (226).

11. The bicycle steering prompt system (20) as claimed in any one of claims from 1 to 3, wherein each of the at least two projection lights (221) comprises a battery unit (226).

12. The bicycle steering prompt system (20) as claimed in any one of claims from 1 to 3, wherein each of the at least two projection lights (221) is in a wired connection to a power supply unit (34).

13. The bicycle steering prompt system (20) as claimed in any one of claims from 1 to 3, wherein each of the at least two projection lights (221) is replaceable by a laser light.

14. The bicycle steering prompt system (20) as claimed in any one of claims from 1 to 3, wherein the controller (23) is connected to two supplement lights (52) of a traveling light supplement system (50), and when the controller (23) triggers the direction light set (21) to give a direction prompt, one of the two supplement lights (52) is activated at a side same as the direction light set is triggered.
